(19) Europäisches Patentamt
European Patent Office
Office européen des brevets

(11) **EP 2 659 281 B1**

(12) **EUROPÄISCHE PATENTSCHRIFT**

(45) Veröffentlichungstag und Bekanntmachung des Hinweises auf die Patenterteilung:
**30.01.2019   Patentblatt 2019/05**

(21) Anmeldenummer: **11802105.4**

(22) Anmeldetag: **23.12.2011**

(51) Int Cl.:
*G01S 3/803* *(2006.01)*        *G01S 3/808* *(2006.01)*

(86) Internationale Anmeldenummer:
**PCT/EP2011/073959**

(87) Internationale Veröffentlichungsnummer:
**WO 2012/089668 (05.07.2012 Gazette 2012/27)**

(54) **VERFAHREN UND VORRICHTUNG ZUM ERHÖHEN DER PEILGENAUIGKEIT EINER EMPFÄNGERANORDNUNG**

METHOD AND APPARATUS FOR INCREASING THE DIRECTION-FINDING ACCURACY OF A RECEIVER ARRANGEMENT

PROCÉDÉ ET DISPOSITIF SERVANT À AUGMENTER LA PRÉCISION DE REPÉRAGE RADIOGONIOMÉTRIQUE D'UN SYSTÈME DE RÉCEPTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.12.2010   DE 102010056528**

(43) Veröffentlichungstag der Anmeldung:
**06.11.2013   Patentblatt 2013/45**

(73) Patentinhaber: **ATLAS ELEKTRONIK GmbH**
**28309 Bremen (DE)**

(72) Erfinder:
• BECKEFELD, Frank
  **27321 Emtinghausen (DE)**
• RENKEN, Klaus
  **28857 Syke (DE)**

(74) Vertreter: **thyssenkrupp Intellectual Property GmbH**
**ThyssenKrupp Allee 1**
**45143 Essen (DE)**

(56) Entgegenhaltungen:
**WO-A1-00/16308**

EP 2 659 281 B1

**Beschreibung**

Die Erfindung betrifft ein Verfahren zum Erhöhen der Peilgenauigkeit einer Empfängeranordnung nach dem Oberbegriff von Anspruch 1 sowie eine Vorrichtung zur Erhöhung der Peilgenauigkeit einer Empfängeranordnung nach dem Oberbegriff von Anspruch 10.

Gemäß dem Stand der Technik werden in der Sonartechnik schallabstrahlende oder schallreflektierende Ziele über Richtcharakteristiken gepeilt. Die Richtcharakteristiken entsprechen Richtungssignalen relativer Empfangsrichtungen zu einer Empfängeranordnung einer Sonaranlage. Die Schallwellen der schallabstrahlenden oder schallreflektierenden Ziele werden dazu mit den Empfängern einer Empfangsanlage in elektrische Signale umgewandelt und aus den elektrischen Signalen, die als Empfangssignale bezeichnet werden, werden durch zeitverzögertes Addieren Richtungssignale einer relativen Empfangsrichtung bestimmt.

In DE 24 59 219 werden ein Verfahren und eine Vorrichtung zur Richtungsbildung beschrieben. Dazu weist ein Sonar eine Empfängeranordnung mit räumlich verteilten elektroakustischen Wandlern auf. Der Gesamtöffnungswinkel aus dem Schallwellen mit der Empfängeranordnung empfangen und in Empfangssignale gewandelt werden können, wird dazu in Teilöffnungswinkel zerlegt. Für jeden der Teilöffnungswinkel wird aus den Empfangssignalen durch Laufzeitkompensation ein Richtungssignal gebildet.

Die WO 00/16308 offenbart ein Verfahren zum Kompensieren von abgespeicherten Daten der Empfangssignale einer Empfängeranordnung, wobei nach einer statistischen Analyse die Daten von fehlerhaften Empfangssensoren durch Nullwerte ersetzt werden, bevor eine weitere Verarbeitung der Daten erfolgt.

Zur Erhöhung der Peilgenauigkeit der Empfangsrichtung muss der Gesamtöffnungswinkel in möglichst viele Teilöffnungswinkel des Gesamtöffnungswinkels zerlegt werden und für jeden dieser Teilöffnungswinkel separat ein Richtungssignal berechnet werden.

Nachteilig hierbei ist, dass die Laufzeitkompensation, also das Addieren der einzelnen zeitversetzten Empfangssignale zur Berechnung eines Richtungssignals, sehr rechenintensiv ist. Daher ist eine Erhöhung der Peilgenauigkeit der Empfangsrichtung nur mit hohem Rechenaufwand möglich.

Der vorliegenden Erfindung liegt daher das technische Problem zugrunde, die Peilgenauigkeit der Empfangsrichtungen einer Empfängeranordnung zu erhöhen, ohne zusätzliche Richtungssignale aus den Empfangssignalen zu berechnen.

Die Erfindung löst dieses Problem durch die Merkmale eines Verfahrens zum Erhöhen der Peilgenauigkeit einer Empfängeranordnung gemäß Anspruch 1 sowie durch die Merkmale einer Vorrichtung zur Erhöhung der Peilgenauigkeit einer Empfängeranordnung gemäß Anspruch 10.

Das erfindungsgemäße Verfahren sowie die erfindungsgemäße Vorrichtung sind dazu derart ausgelegt, dass aus den jeweils einer Empfangsrichtung zugeordneten Frequenzlinien bereits berechneter Richtungssignale einer Empfängeranordnung Frequenzlinien weiterer Richtungen interpoliert werden.

Dazu betrifft die Erfindung ein Verfahren zum Erhöhen der Peilgenauigkeit einer Empfängeranordnung. Das Verfahren kann z.B. mit einer Sonaranlage, z.B. an einem Unterwasserfahrzeug oder einem Unterwasserlaufkörper, durchgeführt werden. Mit der Empfängeranordnung werden aus einem Gesamtöffnungswinkel einfallende Schallwellen in Empfangssignale und aus den Empfangssignalen Richtungssignale ermittelt. Die Richtungssignale sind dabei jeweils einer zur Empfängeranordnung, also zur Ausrichtung bzw. der Position der Empfängeranordnung, relativen Empfangsrichtung zugeordnet und stellen die aus der jeweiligen relativen Empfangsrichtung empfangenen Schallwellen dar. Aus jedem Richtungssignal werden derselben Empfangsrichtung des Richtungssignals zugeordnete Frequenzlinien ermittelt bzw. berechnet, indem das Richtungssignal in den Spektralbereich transformiert wird und das Betragsspektrum, durch Betragsbildung des in den Spektralbereich transformierten Richtungssignals, ermittelt bzw. gebildet wird. Jedes der Betragsspektren eines Richtungssignals weist Frequenzlinien jeweils einer Frequenz des Frequenzbereichs des Betragsspektrums auf, die derselben Empfangsrichtung des Richtungssignals zugeordnet werden, aus dem das Betragsspektrum berechnet wurde. Ferner weist jede Frequenzlinie des Betragsspektrums einen Amplitudenwert auf.

Es werden Richtungsfunktionen jeweils einer Frequenz mit ersten Funktionsargumenten gebildet. D. h. für jede Frequenz des Frequenzbereichs wird separat eine Richtungsfunktion gebildet. Jede Richtungsfunktion weist erste Funktionsargumente jeweils mit einem Funktionswert auf. Benachbarte erste Funktionsargumente einer der Richtungsfunktionen werden aus den Frequenzlinien der benachbarten Empfangsrichtungen mit derselben Frequenz, für die die Richtungsfunktion gebildet wird, gebildet. Jedes Funktionsargument weist als Funktionswert den Amplitudenwert oder einen aus dem Amplitudenwert abgeleiteten Wert der Frequenzlinie der Frequenz der jeweiligen Richtungsfunktion der dem jeweiligen ersten Funktionsargument entsprechenden Empfangsrichtung auf.

Jede der Richtungsfunktionen wird in den Spektralbereich, also aus einen sog. Winkelbereich in einen sog. Winkelfrequenzbereich, transformiert, wodurch aus jeder Richtungsfunktion eine erste Spektralfunktion mit ersten Spektralfunktionsargumenten erhalten wird. Zwischen den mittleren Spektralfunktionsargumenten der ersten Spektralfunktionsargumente werden weitere Spektralfunktionsargumente in die erste Spektralfunktion eingefügt bzw. die erste Spektralfunktion mit weiteren Spektralfunktionsargumenten aufgefüllt. Die weiteren Spektralfunktionsargumente weisen jeweils Funktionswerte im Bereich von Null oder Null auf.

Die mit weiteren Spektralfunktionsargumenten aufgefüllte erste Spektralfunktion wird aus dem Spektralbereich, also aus dem sog. Winkelfrequenzbereich in den sog. Winkelbereich, rücktransformiert, wodurch sich eine interpolierte erste Richtungsfunktion für die Frequenz ergibt, für die die zugrundegelegte Richtungsfunktion gebildet wurde. Diese interpolierte erste Richtungsfunktion weist interpolierte Funktionsargumente zwischen den ersten Funktionsargumenten auf. Die interpolierten Funktionsargumente entsprechen dabei Frequenzlinien weiterer relativer Richtungen zur Empfängeranordnung mit der Frequenz der Richtungsfunktion. Jede der weiteren relativen Richtungen jeweils eines interpolierten Funktionsarguments liegt dabei zwischen den Empfangsrichtungen der ersten Funktionsargumente zwischen denen das jeweilige interpolierte Funktionsargument liegt. Aus den interpolierten Funktionsargumenten der gleichen relativen Richtung aller interpolierten ersten Richtungsfunktionen, also für alle Frequenzen des Frequenzbereichs, kann z.B. ein Spektrum dieser relativen Richtung gebildet werden.

Ferner betrifft die Erfindung eine Vorrichtung zur Erhöhung der Peilgenauigkeit einer Empfängeranordnung. Die Vorrichtung kann z.B. Bestandteil einer Sonaranlage, z.B. eines Unterwasserfahrzeugs oder Unterwasserlaufkörpers, sein. Die Vorrichtung ist derart ausgebildet, um Schallwellen mit einer Empfängeranordnung zu empfangen und aus den Schallwellen Empfangssignale zu ermitteln. Aus den Empfangssignalen werden dann Richtungssignale jeweils einer zur Empfängeranordnung relativen Empfangsrichtung gebildet bzw. ermittelt und aus jedem Richtungssignal Frequenzlinien, z.B. durch Fourier-Transformation, diskrete Fourier-Transformation oder schnelle Fourier-Transformation des Richtungssignals mit anschließender Betragsbildung, berechnet bzw. ermittelt. Die Frequenzlinien werden derselben Empfangsrichtung zugeordnet, der auch das Richtungssignal, aus dem die Frequenzlinien bestimmt worden sind, zugeordnet ist. Jede Frequenzlinie entspricht dabei einer Frequenz eines Frequenzbereichs und weist einen Amplitudenwert auf.

Ferner ist die Vorrichtung derart ausgebildet, um Richtungsfunktionen jeweils für eine Frequenz mit ersten Funktionsargumenten zu bilden. Hierbei entsprechen die benachbarten ersten Funktionsargumente den Frequenzlinien der benachbarten Empfangsrichtungen mit der Frequenz, für die die Richtungsfunktion gebildet wird. D.h. jeder Empfangsrichtung sind mehrere Frequenzlinien jeweils einer von verschiedenen Frequenzen eines Frequenzbereichs zugeordnet. Zur Bildung einer Richtungsfunktion werden die Frequenzlinien der Empfangsrichtungen der gleichen Frequenz als Funktionsargumente der Richtungsfunktion dargestellt. Eine Richtungsfunktion enthält dann alle Frequenzlinien der gleichen Frequenz, nämlich der Frequenz der jeweiligen Richtungsfunktion, für alle Empfangsrichtungen. Benachbarte erste Funktionsargumente entsprechen benachbarten Empfangsrichtungen. Jedes Funktionsargument weist als Funktionswert den Amplitudenwert oder einen aus dem Amplitudenwert abgeleiteten Wert der Frequenzlinie der Frequenz der jeweiligen Richtungsfunktion der dem ersten Funktionsargument entsprechenden Empfangsrichtung auf.

Außerdem ist die Vorrichtung derart ausgebildet, um jede der Richtungsfunktionen in den Spektralbereich zu transformieren. Nach der Transformation wird aus jeder Richtungsfunktion eine erste Spektralfunktion erhalten, die erste Spektralfunktionsargumente aufweist. Ferner ist die Vorrichtung derart ausgebildet, um zwischen den mittleren Spektralfunktionsargumenten der ersten Spektralfunktionsargumente weitere Spektralfunktionsargumente einzufügen bzw. aufzufüllen. Die weiteren Spektralfunktionsargumente werden derart gewählt, dass diese jeweils Funktionswerte im Bereich von Null oder Null aufweisen. Zudem ist die Vorrichtung derart ausgebildet, um die mit weiteren Spektralfunktionsargumenten aufgefüllte erste Spektralfunktion aus dem Spektralbereich zurück zu transformieren, wodurch sich eine interpolierte erste Richtungsfunktion ergibt.

Die interpolierte erste Richtungsfunktion weist interpolierte Funktionsargumente zwischen den ersten Funktionsargumenten auf. D.h. die interpolierte erste Richtungsfunktion entspricht weitestgehend der jeweilig für die Berechnung zugrundegelegten Richtungsfunktion, weist jedoch zusätzliche interpolierte Funktionsargumente zwischen den ersten Funktionsargumenten auf. Die interpolierten Funktionsargumente einer interpolierten ersten Richtungsfunktion entsprechen Frequenzlinien von weiteren relativen Richtungen.

Vorteil des erfindungsgemäßen Verfahrens sowie der erfindungsgemäßen Vorrichtung ist, dass durch die Ermittlung der interpolierten Frequenzlinien weiterer relativer Richtungen, die Peilgenauigkeit der Empfängeranordnung, z.B. einer Sonaranlage, erhöht werden kann, ohne dass weitere Richtungssignale aus dem Empfangssignalen gebildet werden müssen. Die Peilgenauigkeit wird erhöht, da empfangene Schallwellen bzw. die daraus ermittelten Frequenzlinien nicht nur Empfangsrichtungen, sondern auch weiteren relativen Richtungen zugeordnet werden können, wodurch die Auflösung des Gesamtöffnungswinkels der Empfängeranordnung erhöht wird.

Gemäß einer weiteren vorteilhaften Weiterbildung des erfindungsgemäßen Verfahrens wird der Frequenzbereich, z.B. des Betragsspektrums eines der Richtungssignale, in Frequenzbänder eingeteilt. Für jedes Frequenzband wird dann eine Frequenzbandlinie aus den Amplitudenwerten bzw. aus den aus den Amplitudenwerten abgeleiteten Werten der Frequenzlinien des jeweiligen Frequenzbandes mit einem Frequenzbandamplitudenwert, ermittelt. Ferner werden die Richtungsfunktionen jeweils aus den Frequenzbandlinien der Frequenzbänder, anstatt aus den Frequenzlinien, jeweils für ein Frequenzband, anstatt für eine Frequenz, gebildet. Die Richtungsfunktion wird dabei aus den Frequenzbandamplitudenwerten für das Frequenzband der Richtungsfunktion aller Empfangsrichtungen gebildet, indem diese als Funktionsargumente der Richtungsfunktion für ein Frequenzband dargestellt werden.

Gemäß einer weiteren vorteilhaften Weiterbildung der Vorrichtung ist diese derart ausgebildet, um den Frequenzbereich in Frequenzbänder jeweils eines Teilfrequenzbereichs einzuteilen. Zudem ist die Vorrichtung derart ausgebildet, um für jedes Frequenzband einen Frequenzbandlinie aus den Frequenzlinien des jeweiligen Frequenzbandes mit einem Frequenzbandamplitudenwert zu ermitteln, wobei der Frequenzbandamplitudenwert aus den Amplitudenwerten oder aus den aus den Amplitudenwerten abgeleiteten Werte der Frequenzlinien eines Frequenzbandes der jeweiligen Frequenzbandamplitudenwerts durch mathematische Methoden wie z.B. Mittelwertbildung oder Addition ermittelt wird. Ferner ist die Vorrichtung derart ausgebildet, um die Richtungsfunktionen aus den Frequenzbandamplitudenwerten für einen Frequenzbereich zu bilden, indem die ersten Funktionsargumente aus den Frequenzbandamplitudenwerten des Frequenzbandes der Richtungsfunktion aller Empfangsrichtungen gebildet werden. Jede Richtungsfunktion wird also für ein Frequenzband gebildet und die Funktionsargumente der Richtungsfunktion durch die Frequenzbandamplitudenwerte dargestellt, wobei die Richtungsfunktion jeweils durch die Frequenzbandamplitudenwerte desselben Frequenzbandes aller Empfangsrichtungen gebildet wird.

Vorteil der Bildung von Richtungsfunktionen aus Frequenzbändern und Frequenzbandamplitudenwerten anstatt aus Frequenzen und Amplitudenwerten bzw. aus den Amplitudenwerten abgeleiteten Werten ist, dass zur Berechnung interpolierter Frequenzbandamplitudenwerte weiterer relativer Richtungen weniger Richtungsfunktionen gebildet werden müssen, um den gesamten Frequenzbereich abzudecken, und somit eine schnellere Berechnung mit geringerem Energieaufwand ermöglicht wird. Dies ist besonders dann vorteilhaft, wenn eine genauere Auflösung der Richtungen des Gesamtöffnungswinkels einer genaueren Auflösung des Frequenzbereichs vorgezogen wird.

Gemäß einer weiteren vorteilhaften Weiterbildung der Erfindung werden die Empfangssignale zum Ermitteln der Richtungssignale in ein tieferes Band bzw. einen tieferen Frequenzbereich frequenzumgesetzt. Die frequenzumgesetzten Empfangssignale werden daraufhin tiefpassgefiltert und die tiefpassgefilterten frequenzumgesetzten Empfangssignale digitalisiert. Ferner werden aus den digitalisierten tiefpassgefilterten frequenzumgesetzten Empfangssignalen Richtungssignale, z.B. durch zeitversetztes also laufzeitkompensiertes Addieren ermittelt bzw. berechnet.

Gemäß einer weiteren vorteilhaften Weiterbildung der erfindungsgemäßen Vorrichtung, ist diese derart ausgebildet, um die Empfangssignale zum Ermitteln der Richtungssignale in ein tieferes Frequenzband frequenzumzusetzen. Ferner ist die Vorrichtung derart ausgebildet, um die frequenzumgesetzten Empfangssignale tiefpasszufiltern und die tiefpassgefilterten frequenzumgesetzten Empfangssignale zu digitalisieren. Außerdem ist die Vorrichtung derart ausgebildet, um aus den digitalisierten tiefpassgefilterten frequenzumgesetzten Empfangssignalen Richtungssignale zu bilden.

Vorteil der Frequenzumsetzung der Empfangssignale ist, dass eine Digitalisierung aufgrund des Nyquist-Shannon-Abtasttheorems mit einer geringeren Samplingfrequenz möglich ist, wodurch vergleichsweise geringere Mengen von Daten verarbeitet werden müssen bzw. geringere Rechenleistung bei einer nachgeschalteten Digitalisierung notwendig ist.

Vorteil der Tiefpassfilterung ist, dass nur die wesentlichen Informationen der frequenzumgesetzten Empfangssignale nach der Tiefpassfilterung erhalten bleiben. Durch die Frequenzumsetzung entstehen nämlich z.B. Summenmischprodukte, die für die weitere Verarbeitung unwesentliche Informationen enthalten. Durch Entfernen dieser unwesentlichen Informationen wird somit ein geringerer Aufwand an Rechenleistung für die weitere Verarbeitung benötigt.

Vorteil der Digitalisierung der tiefpassgefilterten frequenzumgesetzten Empfangssignale ist, dass die weitere Signalverarbeitung nach der Digitalisierung digital durchgeführt werden kann, wodurch ebenfalls eine geringe Rechenleistung und somit geringere Energie für die weitere digitale Verarbeitung im Vergleich zu einer analogen Verarbeitung benötigt wird.

Gemäß einer weiteren vorteilhaften Weiterbildung des erfindungsgemäßen Verfahrens wird jede der Richtungsfunktionen mit einer komplexen diskreten Fourier-Transformation in den Spektralbereich transformiert und mit einer inversen komplexen diskreten Fourier-Transformation aus dem Spektralbereich zurück transformiert.

Gemäß einer weiteren vorteilhaften Weiterbildung der erfindungsgemäßen Vorrichtung ist diese derart ausgebildet, um jede der Richtungsfunktionen mit einer komplexen diskreten Fourier-Transformation in den Spektralbereich zu transformieren und mit einer inversen komplexen diskreten Fourier-Transformation aus dem Spektralbereich zurück zu transformieren.

Vorteil der Transformation der Richtungsfunktionen mit einer komplexen diskreten Fourier-Transformation bzw. der Rücktransformation mit einer inversen komplexen diskreten Fourier-Transformation ist, dass für diese eine geringe Rechenleistung benötigt wird als z.B. für eine normale Fourier-Transformation. Dadurch kann Rechenleistung eingespart werden bzw. die Zeit für die Transformation und für die Rücktransformation verkürzt werden.

Gemäß einer weiteren vorteilhaften Weiterbildung wird jede der Richtungsfunktionen mit linksseitigen und rechtsseitigen Funktionsargumenten aufgefüllt, wobei die linksseitigen Funktionsargumente Richtungen, die linksseitig der Winkel der Empfangsrichtungen der ersten Funktionsargumente liegen, entsprechen. Ferner entsprechen die rechtsseitigen Funktionsargumente Richtungen, die rechtsseitig der Empfangsrichtungen der ersten Funktionsargumente liegen. Linksseitige Funktionsargumente und rechtsseitige Funktionsargumente entsprechen also Richtungen, die außerhalb des Gesamtöffnungswinkels der Empfängeranordnung liegen. Hierzu geht man von einer Darstellung aus, dass von einem Nullwinkel, den z.B. eine der Empfangsrichtungen bildet, im Uhrzeigersinn bzw. rechtsdrehend von diesem Nullwinkel aus einige Empfangsrichtungen innerhalb des Gesamtöffnungswinkels rechtsseitigen des Nullwinkels liegen und damit ersten Funktionsargumenten entsprechen. Wiederum liegen weitere Richtungen rechtsseitig bzw. im Uhrzeigersinn außerhalb des Gesamtöffnungswinkels der Empfängeranordnung, die dann den rechtsseitigen Funktionsargumenten entsprechen. Linksseitige Funktionsargumente liegen entsprechend linksseitig, also gegen den Uhrzeiger von einem Nullwert gesehen, neben dem Gesamtöffnungswinkel der Empfängeranordnung.

Die linksseitigen Funktionsargumente werden jeweils unterhalb bzw. linksseitig des Funktionsarguments der ersten Funktionsargumente, das der am weitesten links liegenden Empfangsrichtung der Gesamtöffnungswinkel entspricht, und die rechtsseitigen Funktionsargumente oberhalb bzw. rechtsseitig des Funktionsarguments der ersten Funktionsargumente, das der am weitesten rechts liegenden Empfangsrichtung des Gesamtöffnungswinkels entspricht, eingefügt bzw. aufgefüllt. Es werden genauso viele kleinere und größere Funktionsargumente zu den ersten Funktionsargumenten in eine Richtungsfunktion aufgefüllt, so dass die Gesamtanzahl der Funktionsargumente einer Zweierpotenz entspricht.

Gemäß einer weiteren vorteilhaften Weiterbildung der erfindungsgemäßen Vorrichtung ist diese derart ausgebildet, um jede der Richtungsfunktionen mit linksseitigen und rechtsseitigen Funktionsargumenten aufzufüllen. Hierbei entsprechen die linksseitigen Funktionsargumente linksseitig der Empfangsrichtungen liegende Richtungen und die rechtsseitigen Funktionsargumente rechtsseitig der Empfangsrichtungen liegende Richtungen. Ferner ist die Vorrichtung derart ausgebildet, um die linksseitigen Funktionsargumente linksseitig bzw. unterhalb des Funktionsarguments der ersten Funktionsargumente, das der am weitesten links liegenden Empfangsrichtung des Gesamtöffnungswinkels entspricht, und die rechtsseitigen Funktionsargumente rechtsseitig bzw. oberhalb des Funktionsarguments der ersten Funktionsargumente, das der am weitesten rechts liegenden Empfangsrichtung des Gesamtöffnungswinkels entspricht, aufzufüllen. Die Vorrichtung ist derart ausgebildet, um genau so viele linksseitige und rechtsseitige Funktionsargumente zu den ersten Funktionsargumenten in eine Richtungsfunktion hinzuzufügen bzw. aufzufüllen, so dass die Gesamtanzahl der Funktionsargumente einer Zweierpotenz entspricht.

Vorteil des Hinzufügens bzw. Auffüllens der Richtungsfunktionen mit linksseitigen und rechtsseitigen Funktionsargumenten ist, dass die Richtungsfunktionen jeweils mit einer komplexen schnellen Fourier-Transformation (FFT) in den Spektralbereich transformiert werden können, wodurch weitere Rechenleistung eingespart wird und somit eine schnellere Berechnung mit geringem Energieaufwand als bei der Transformation mit einer komplexen diskreten Fourier-Transformation möglich ist.

Gemäß einer weiteren vorteilhaften Weiterbildung des erfindungsgemäßen Verfahrens, weist der Funktionswert des am weitesten links liegenden Funktionsarguments der linksseitigen Funktionsargumente, also das Funktionsargument, das der am weitesten links liegenden Richtung entspricht, einen Wert im Bereich von Null oder Null auf. Ebenfalls weist der Funktionswert des am weitesten rechts liegenden Funktionsarguments der rechtsseitigen Funktionsargumente, also das Funktionsargument, das der am weitesten rechts liegenden Richtung entspricht, ebenfalls einen Wert im Bereich von Null oder Null auf.

Auch gemäß einer weiteren vorteilhaften Weiterbildung der erfindungsgemäßen Vorrichtung ist diese derart ausgebildet, um den Funktionswert des am weitesten link liegenden Funktionsarguments der linksseitigen Funktionsargumente derart zu wählen, dass dieses einen Wert im Bereich von Null oder Null aufweist. Ferner ist die Vorrichtung derart ausgebildet, um den Funktionswert des am weitesten rechts liegenden Funktionsarguments der rechtsseitigen Funktionsargumente derart zu wählen, so dass dieser einen Wert im Bereich von Null oder Null aufweist.

Vorteil die Funktionswerte des am weitesten links liegenden Funktionsarguments der linksseitigen Funktionsargumente und des am weitesten rechts liegenden Funktionsarguments der rechtsseitigen Funktionsargumente im Bereich von Null oder Null ist, dass bei der Spektraltransformation der Richtungsfunktionen mit der Fourier-Transformation der sog. "Leck-Effekt" weitestgehend vermieden wird.

Gemäß einer weiteren vorteilhaften Weiterbildung des erfindungsgemäßen Verfahrens wird der Steigungsverlauf der Funktionswerte der ersten Funktionsargumente durch die Funktionswerte der linksseitigen Funktionsargumente im Bereich des liegenden Funktionsarguments der ersten Funktionsargumente, das der am weitesten links liegenden Empfangsrichtung entspricht, in diesem Bereich zunächst fortgeführt, bevor die Funktionswerte der linksseitigen Funktionsargumente bis zum Funktionsargument der linksseitigen Funktionsargumente, das der am weitesten links neben den Empfangsrichtungen links liegenden Richtung entspricht, auf einen Wert im Bereich von Null oder Null abfallen. Ferner wird der Steigungsverlauf der Funktionswerte der ersten Funktionsargumente durch die Funktionswerte der rechtsseitigen Funktionsargumente im Bereich des Funktionsarguments der ersten Funktionsargumente, das der am weitesten rechts liegenden Empfangsrichtung entspricht, in diesem Bereich zunächst fortgeführt, bevor die Funktionswerte der rechtsseitigen Funktionsargumente bis zum Funktionsargument der rechtsseitigen Funktionsargumente, das der am weitesten rechts neben den Empfangsrichtungen rechts liegenden Richtung entspricht, auf einen Wert im Bereich von Null oder Null abfallen. Der Steigungsverlauf der Funktionswerte der ersten Funktionsargumente wird also in den Randbereichen der ersten Funktionsargumente jeweils zu den linksseitigen und den rechtsseitigen Funktionsargumenten betrachtet und jeweils durch die Funktionswerte der linksseitigen und rechtsseitigen Funktionsargumente im jeweiligen Randbereich mit derselben Steigung fortgesetzt.

Vorteil der Fortsetzung der Steigung der Funktionswerte der ersten Funktionsargumente einer Richtungsfunktion in den Randbereichen ist, dass hierdurch eine genauere Interpolation der Frequenzlinien der Empfangsrichtungen in den Randbereichen der Empfängeranordnung, also in den Randbereichen des Gesamtöffnungswinkels, ermöglicht wird.

Gemäß einer weiteren vorteilhaften Weiterbildung wird jeweils eine zu der ersten Spektralfunktion identische zweite Spektralfunktion mit der Funktionsvariablen oder der negierten Funktionsvariablen multipliziert und in gleicher Weise wie die jeweilige erste Spektralfunktion, mit weiteren Spektralfunktionsargumenten aufgefüllt. D.h. zu jeder der ersten Spektralfunktionen wird eine zweite Spektralfunktion erzeugt. Diese zweite Spektralfunktion entspricht sozusagen einer Kopie der ersten Spektralfunktion. Die zweite Spektralfunktion wird dann mit der Funktionsvariablen oder negierten Funktionsvariablen der Spektralwinkelbereichsfunktion multipliziert. Hierbei entspricht die Funktionsvariable der transformierten variablen der Richtungsfunktion multipliziert mit der imaginären Einheit "i" also $\sqrt{-1}$. Ferner wird die zweite Spektralfunktion in gleicher Weise wie die jeweilige erste Spektralfunktion mit weiteren Spektralfunktionsargumenten zwischen den mittleren Spektralfunktionsargumenten der ersten Spektralfunktionsargumente aufgefüllt. Zuletzt wird jede der aufgefüllten zweiten Spektralfunktionen aus dem Spektralbereich rücktransformiert, wodurch sich eine interpolierte zweite Richtungsfunktion ergibt. Die interpolierte zweite Richtungsfunktion entspricht dabei der abgeleiteten interpolierten ersten Richtungsfunktion.

Vorteil der Bildung der Ableitung der ersten interpolierten Richtungsfunktion durch Multiplikation im Spektralbereich ist, das Maxima der interpolierten ersten Winkelbereichsfunktion einfach bestimmt werden können, wodurch Frequenzlinien mit hohen Amplitudenwerten erkannt werden.

Gemäß einer weiteren vorteilhaften Weiterbildung des erfindungsgemäßen Verfahrens wird jede der interpolierten ersten Richtungsfunktionen durch lineare Interpolation mit zusätzlichen weiteren Funktionsargumenten mit interpolierten Funktionswerten aufgefüllt. Es werden also zwischen die ersten Funktionsargumente und die interpolierten Funktionsargumente zusätzliche weitere Funktionsargumente eingefügt, die einen interpolierten Funktionswert aufweisen, der jeweils z.B. dem Mittelwert der dem zusätzlichen weiteren Funktionsargument benachbarten Funktionsargumenten entspricht.

Vorteil der linearen Interpolation ist, dass mit geringer Rechenleistung Frequenzlinien weiterer interpolierter Empfangsrichtungen erzeugt werden können.

Weitere vorteilhafte Ausführungsformen ergeben sich aus den Unteransprüchen sowie aus den anhand der beigefügten Zeichnung näher erläuterten Ausführungsbeispielen. In der Zeichnung zeigen:

Fig. 1    eine Vorrichtung gemäß einem Ausführungsbeispiel der Erfindung zur Durchführung eines Ausführungsbeispiels des erfindungsgemäßen Verfahrens;

Fig. 2    eine genauere Darstellung eines Richtungsbildners der Vorrichtung aus Fig. 1;

Fig. 3    eine genauere Darstellung eines Spektralbildners der Vorrichtung aus Fig. 1;

Fig. 4    eine genauere Darstellung eines Panoramainterpolators der Vorrichtung aus Fig. 1;

Fig. 5a    einen Frequenzbereich eines Betragsspektrums mit Frequenzlinien:

Fig. 5b    ein Frequenzband mit einem Frequenzbandamplitudenwert;

Fig. 6    eine Richtungsfunktion einer Frequenz;

Fig. 7    die Richtungsfunktion aus Fig. 6, wobei diese mit linksseitigen und rechtsseitigen Funktionsargumenten aufgefüllt ist;

Fig. 8    den Betrag einer ersten Spektralfunktion;

Fig. 9    den Betrag einer ersten Spektralfunktion mit aufgefüllten weiteren Spektralfunktionsargumenten;

Fig. 10    eine interpolierte erste Richtungsfunktion mit linksseitigen und rechtsseitigen Funktionsargumenten und

Fig. 11    eine interpolierte erste Richtungsfunktion.

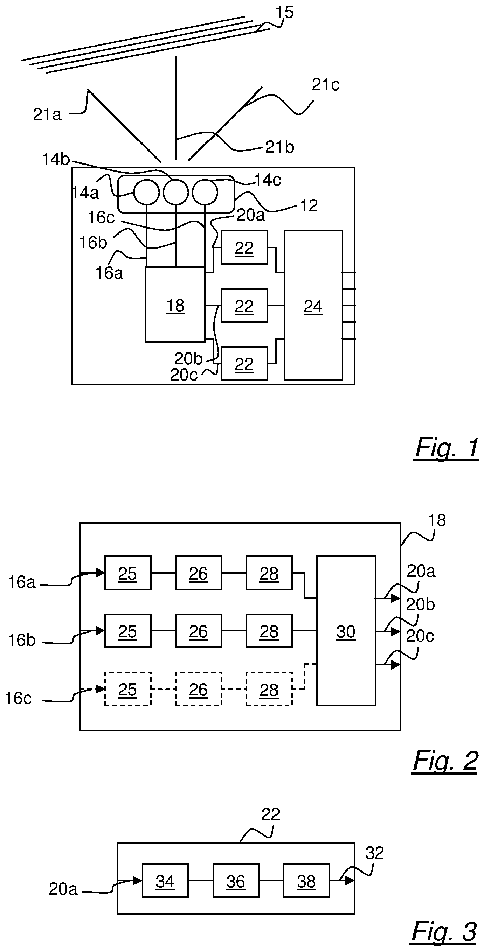

Fig. 1 zeigt ein Ausführungsbeispiel der erfindungsgemäßen Vorrichtung, z.B. einer Sonaranlage z. B. an einem Unterwasserfahrzeug oder Unterwasserkörper, mit einer Empfängeranordnung 12, bestehend aus mehreren Empfängern 14a bis 14c zum Empfangen einfallender Schallwellen 15. Die Empfänger 14a bis 14c sind z.B. elektroakustische und/oder optoakustische Empfänger und/oder Wandler bzw. Hydrophone. Die empfangenen Schallwellen 15 werden mit den Empfängern 14a bis 14c in Empfangssignale 16a bis 16c umgewandelt. Diese Empfangssignale 16a bis 16c werden einem Richtungsbildner 18 zugeführt, der daraus Richtungssignale 20a bis 20c erzeugt. Jedes der Richtungssignale 20a bis 20c entspricht jeweils einer relativen Empfangsrichtung 21a bis 21c zur Empfängeranordnung 12.

Die Empfangsrichtungen 21a bis 21c entsprechen jeweils einem relativen Winkel zur Empfängeranordnung 12. Beispielhaft ist es vorteilhaft eine der Empfangsrichtungen 21a bis 21c als Bezugswinkel oder Nullwinkel festzulegen. In Fig. 1 ist die Empfangsrichtung 21b als Nullwinkel festgelegt, da diese mittig im Gesamtöffnungswinkel senkrecht zur Empfängeranordnung 12 liegt. Die Empfangsrichtung 21a liegt dann linksseitig und die Empfangsrichtung 21b rechtsseitig des Nullwinkels bzw. der Empfangsrichtung 21c.

Die Richtungssignale 20a bis 20c werden jeweils einem Spektralbildner 22 zugeführt, der jeweils aus einem der Richtungssignale 20a bis 20c ein Frequenzspektrum sowie dessen Betragsspektrum ermittelt. Jedes in einem Spektralbildner 22 ermittelte Betragsspektrum wird einem Panoramainterpolator 24 zugeführt, der dem Spektralbildner 22 nachgeschaltet ist.

Im Panoramainterpolator 24 werden aus den Frequenzlinien der Betragsspektren der Richtungssignale 20a bis 20c einer Empfangsrichtung 21a bis 21c weitere Betragsspektren weiterer relativer Richtungen gebildet. Am Ausgang des Panoramainterpolators 24 werden die Frequenzlinien der Empfangsrichtungen 21a bis 21c sowie weiterer interpolierter Frequenzlinien weiterer relativer Richtungen ausgegeben.

Fig. 2 zeigt eine genauere Darstellung des Richtungsbildners 18 aus Fig. 1. Dem Richtungsbildner 18 werden die Empfangssignale 16a bis 16c zugeführt, wobei jedes der Empfangssignale 16a bis 16c jeweils einem Frequenzumsetzer 25 zugeführt wird. Im Frequenzumsetzer 25, der z.B. ein Quadraturmischer ist, werden die Empfangssignale 16a bis 16c in einen tieferen Frequenzbereich frequenzumgesetzt bzw. in einen tieferen Frequenzbereich gemischt. Jedes der frequenzumgesetzten Empfangssignale wird nachfolgend einem Tiefpassfilter 26 zugeführt, um darin die unwesentlichen Frequenzanteile, die z.B. bei der Frequenzumsetzung entstanden sind, zu entfernen.

Jedes der frequenzumgesetzten tiefpassgefilterten Empfangssignale wird einem Analog-/Digital-Wandler 28 zugeführt, der dem Tiefpassfilter 26 nachgeschaltet ist. Der Analog-/DigitalWandler digitalisiert das frequenzumgesetzte tiefpassgefilterte Empfangssignal mit einer Abtastrate, die frei wählbar ist jedoch das Nyquist-Shannon-Abtasttheorem berücksichtigen muss. Die frequenzumgesetzten tiefpassgefilterten digitalisierten Empfangssignale werden danach einer Zeitverzögerungsadditionseinheit 30 zugeführt.

In der Zeitverzögerungsadditionseinheit 30 wird eine Laufzeitkompensation der frequenzumgesetzten tiefpassgefilterten digital gewandelten Empfangssignale durchgeführt, um am Ausgang der Zeitverzögerungsadditionseinheit 30 die Richtungssignale 20a bis 20c jeweils einer Empfangsrichtung 21a bis 21c auszugeben.

In der Fig. 2 ist eine Zeitverzögerungsadditionseinheit 30 dargestellt, jedoch wäre es auch möglich, Richtungssignale mit einer Phasenverzögerungsadditionseinheit zu ermitteln. Anstatt die Empfangssignale 16a bis 16c wie in einer Zeitverzögerungsadditionseinheit bzgl. ihrer Laufzeit zu kompensieren, also die Empfangssignale 16a bis 16c zeitverzögert miteinander zu addieren, würde die Phase jedes frequenzumgesetzten tiefpassgefilterten digitalisierten Empfangssignals 16a bis 16c in bestimmter Weise verschoben und diese Empfangssignale dann miteinander addiert werden, um die Richtungssignale 21a bis 21c zu bilden.

Fig. 3 zeigt den Spektralbildner 22 aus Fig. 1. Dem Spektralbildner 22 wird ein Richtungssignal 20a der Richtungssignale 20a bis 20c zugeführt und daraus ein Betragsspektrum 32 derselben der Empfangsrichtungen 21a bis 21c des Richtungssignals 20a ermittelt.

Das Richtungssignal 20a der Richtungssignale 20a bis 20c wird zunächst einem Fensterbildner 34 zugeführt. Im Fensterbildner 34 wird aus dem Richtungssignal 20a ein Zeitfenster einer definierten Zeitdauer ausgeschnitten. Dieses Zeitfenster, also der zeitliche Abschnitt des Richtungssignals 20a wird einer dem Fensterbildern 34 nachgeschalteten DFT-Einheit 36 zugeführt. In der DFT-Einheit 36 wird aus dem Zeitfenster des Richtungssignals 20a, z.B. mit einer diskreten Fourier-Transformation oder schnellen Fourier-Transformation, ein Frequenzspektrum des zeitlichen Abschnitts des Richtungssignals 20a ermittelt. Das Frequenzspektrum wird einem Betragsbildner 38 zugeführt, der der DFT-Einheit 36 nachgeschaltet ist und durch Betragsbildung des Frequenzspektrums ein Betragsspektrum 32 ermittelt. Das Betragsspektrum 32 wird am Ausgang des Spektralbildners 22 ausgegeben.

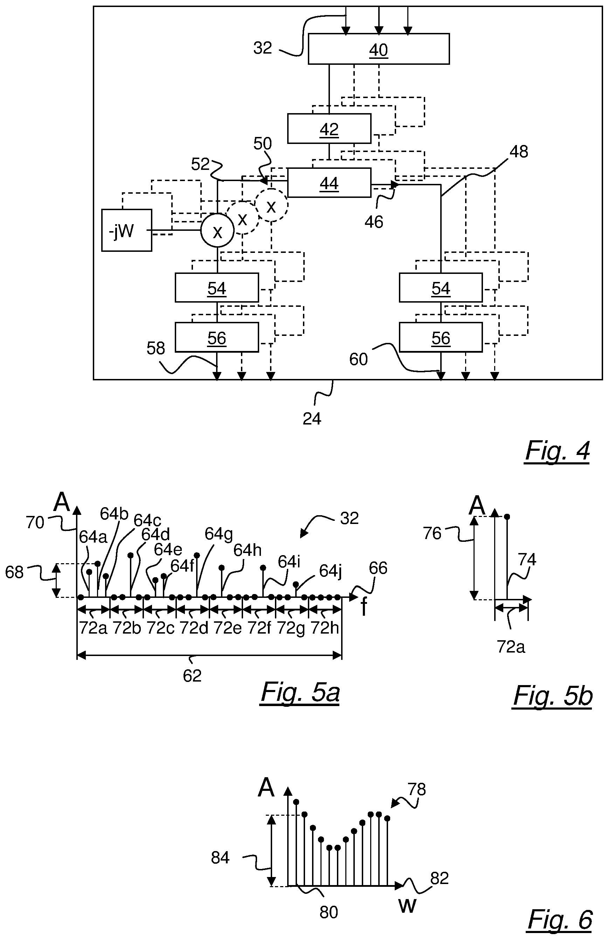

Fig. 4 zeigt den Panoramainterpolator 24 aus Fig. 1. Dem Panoramainterpolator 24 werden die Betragsspektren 32 jedes Richtungssignals 20a bis 20c einer Empfangsrichtung 21a bis 21c zugeführt. Jedes Betragsspektrum 32 weist Frequenzlinien auf, die jeweils einer Frequenz des Frequenzbereichs des Betragsspektrums entsprechen und einen Amplitudenwert aufweisen, der ein Maß für die Intensität der Frequenz der jeweiligen Frequenzlinie ist, die aus der dem Betragsspektrum 32 zugeordneten Empfangsrichtung 21a bis 21c auf die Empfängeranordnung 12 in Form von Schallwellen 15 einfällt. Die Frequenzlinien werden zunächst im Panoramainterpolator 24 einem Richtungsfunktionsbildner 40 zugeführt. Im Richtungsfunktionsbildner 40 werden Richtungsfunktionen jeweils für eine Frequenz der Frequenzlinien einer Frequenz des Frequenzbereichs gebildet, wobei jede Richtungsfunktion erste Funktionsargumente aufweist. Die ersten Funktionsargumente einer Richtungsfunktion werden aus den Frequenzlinien derselben Frequenz aller jeweils einer Empfangsrichtung 21a bis 21c zugeordneten Betragsspektren 32 gebildet. Benachbarte erste Funktionsargumente entsprechen den Frequenzlinien benachbarter Empfangsrichtungen 21a bis 21c.

Für jede Frequenz des Frequenzbereichs des Betragsspektrums 32 wird eine einzelne Richtungsfunktion im Richtungsfunktionsbildner 40 erzeugt. Hierbei können die folgenden Schritte parallel für die einzelnen Richtungsfunktionen in parallelen Verarbeitungswegen oder nacheinander im gleichen Verarbeitungsweg durchgeführt werden.

Jede der Richtungsfunktionen, die im Richtungsfunktionsbildner 40 ermittelt wird, wird einer Auffülleinheit 42 zugeführt. In der Auffülleinheit 42 werden den ersten Funktionsargumenten linksseitige Funktionsargumente und rechtsseitige Funktionsargumente hinzugefügt. Die Richtungsfunktion wird also durch die linksseitige Funktionsargumente sowie die rechtsseitigen Funktionsargumente aufgefüllt. Da jedes Funktionsargument einer Richtungsfunktion verschiedener Empfangsrichtung entspricht, wird hier die Bezeichnung linksseitige Funktionsargumente bzw. rechtsseitige Funktionsargumente gewählt, um damit Funktionsargumente zu beschreiben, die gedachten Richtungen zur Empfängeranordnung 12 entsprechen, die gegen den Uhrzeigersinn, also linksseitig, und im Uhrzeigersinn, also rechtsseitig, neben den Empfangsrichtungen liegen. Durch das Auffüllen ergibt sich eine aufgefüllte Richtungsfunktion, die einer der Auffülleinheit 42 nachgeschalteten zweiten DFT-Einheit 44 zugeführt wird.

Die der zweiten DFT-Einheit 44 zugeführte aufgefüllte Richtungsfunktion wird in eine erste Spektralfunktion transformiert. Hierbei kann exemplarisch analog zur Bezeichnung einer Zeitfunktion, die aus dem Zeitbereich in den Frequenzbereich transformiert wird, die Bezeichnung für die Richtungsfunktion, die aus dem Winkelbereich in den Winkelfrequenzbereich transformiert wird, gewählt werden. Die aufgefüllte Richtungsfunktion wird also spektral, z.B. mit einer komplexen diskreten Fourier-Transformation, transformiert.

Die in der zweiten DFT-Einheit 44 erzeugte erste Spektralfunktion 46 wird einem ersten Verarbeitungspfad 48 zugewiesen und dieselbe erste Spektralfunktion 46 wird als zweite Spektralfunktion 50 einem zweiten Verarbeitungspfad 52 zugewiesen. Die zweite Spektralfunktion 50 wird im zweiten Verarbeitungspfad 52 mit der Funktionsvariablen jW bestehend aus der imaginären Einheit, meist als "j" oder "i" bezeichnet und der Winkelfrequenz z.B. W, über den die Spektralfunktionsargumente aufgetragen sind, multipliziert. Ferner ist auch eine Multiplikation mit der negierten Funktionsvariablen -jW möglich.

Nach der Multiplikation wird die multiplizierte zweite Spektralfunktion 50 einem Nullauffüller 54 zugeführt, der zwischen den mittleren Spektralfunktionsargumenten der ersten Spektralfunktionsargumente der zweiten Spektralfunktion 50 weitere Spektralfunktionsargumente hinzufügt, also die zweite Spektralfunktion 50 mit weiteren Spektralfunktionsargumenten auffüllt. Hierbei weisen die weiteren Spektralfunktionsargumente Funktionswerte im Bereich von Null oder Null auf. Nach Auffüllen mit weiteren Spektralfunktionsargumenten wird die aufgefüllte multiplizierte zweite Spektralfunktion 50 einer IDFT-Einheit 56 zugeführt. In der IDFT-Einheit 56 wird die aufgefüllte multiplizierte zweite Spektralfunktion 50, gemäß obiger analog zu einer Zeitfunktion gewählten Bezeichnung aus dem Winkelfrequenzbereich "W" in den Winkelbereich "w", aus dem Spektralbereich zurücktransformiert, z.B. mit einer komplexen inversen diskreten Fourier-Transformation. Am Ausgang des zweiten Verarbeitungspfads 52 entsteht somit eine interpolierte zweite Richtungsfunktion 58.

Die erste Spektralfunktion 46 wird im ersten Verarbeitungspfad 48 in gleicher Weise wie die zweite Spektralfunktion 50 mit weiteren Spektralfunktionsargumenten in einem Nullauffüller 54 aufgefüllt und danach einer IDFT-Einheit 56 zugeführt. Nach Rücktransformation der aufgefüllten ersten Spektralfunktion entsteht am Ausgang der IDFT-Einheit 56 des ersten Verarbeitungspfad 48 eine interpolierte erste Richtungsfunktion 60.

Die interpolierten Richtungsfunktionen enthalten interpolierte Funktionsargumente zwischen ihre ersten linksseitigen und rechtsseitigen Funktionsargumenten. Diese interpolierten Funktionsargumente entsprechen Frequenzlinien der Frequenz der jeweiligen Richtungsfunktion von interpolierten weiteren Richtungen. Die interpolierten Funktionsargumente aller erzeugten Richtungsfunktionen der gleichen Richtung können nun jeweils in einem Betragsspektrum dargestellt werden, das einem interpolierten Betragsspektrum einer interpolierten weiteren Richtung entspricht.

Fig. 5a zeigt das einer der relativen Richtungen 21a bis 21c zugeordnete Betragsspektrum 32, das am Ausgang des Spektralbildners 22 erzeugt wird. Das Betragsspektrum 32 wird z.B. aus einem Zeitfenster eines der Richtungssignale 20a bis 20c erhalten, wenn dieses Zeitfenster einer DFT-Einheit 36 zugeführt und mit dem Betragsbildner 38 der Betrag berechnet wird. Das Betragsspektrum 32 umfasst einen Frequenzbereich 62. Jede der innerhalb des Frequenzbereichs 62 auftretenden Frequenzlinien 64a bis 64j entspricht einem der Funktionsargumente, also einer Frequenz, des Betragsspektrums 32 auf einer Frequenzachse 66 und weist als Funktionswert einen Amplitudenwert 68 größer Null auf. Hier und im Weiteren wird von einem Amplitudenwert 68 ausgegangen. Es ist jedoch auch möglich das weitere Verfahren mit aus den Amplitudenwerten abgeleiteten Werten durchzuführen. Aus dem Amplitudenwert abgeleitete Werte sind z.B. durch Anwendungen mathematischer Methoden, wie der Logarithmusfunktion, und/oder durch Addition und/oder Multiplikation mit einer Konstanten erhaltene Werte. Die Amplitudenwerte 68 können dabei auf der Amplitudenachse 70 abgelesen werden. Der Frequenzbereich 62 des Betragsspektrums 32 wird durch Einteilung des Frequenzbereichs 62 des Betragsspektrums 32 in benachbarte Frequenzbänder 72a bis 72h eines Teilfrequenzbereichs eingeteilt.

Fig. 5b zeigt eines der Frequenzbänder 72a bis 72h aus Fig. 5b, wobei dieses nur noch eine Frequenzbandlinie 74 anstatt mehrerer Funktionsargumente mit Funktionswerten, also Frequenzlinien 64a bis 64j mit Amplitudenwerten 68, aufweist. Die Frequenzbandlinie 74 ist hier durch Addition der Amplitudenwerte 68 bzw. der Funktionswerte der innerhalb eines der Frequenzbänder 72a bis 72h auftretenden Frequenzlinie 64a bis 64j bzw. Funktionsargumente zusammengefasst worden. Die Frequenzbandlinie 74 ist derselben Empfangsrichtung 21a bis 21c zugeordnet, der auch das Richtungssignal 20a, aus dem das Betragsspektrum 32 ermittelt wurde, zugeordnet ist, aus dem die Frequenzbandlinie 74 ermittelt wurden. Die Frequenzbandlinie 74 entspricht den Frequenzen des jeweiligen Frequenzbandes 72a bis 72h und weist einen Frequenzbandamplitudenwert 76 auf, der den, z.B. durch Addition oder andere mathematischen Methoden, zusammengefassten Amplitudenwerten der Frequenzlinien 64a bis 64j eines der Frequenzbänder 72a bis 72h entspricht.

Fig. 6 zeigt eine Richtungsfunktion 78, die aus den Frequenzlinien 64a bis 64j oder den Frequenzbandlinien 74 der gleichen Frequenz bzw. des gleichen Frequenzbandes 72a bis 72h unterschiedlicher Empfangsrichtungen 21a bis 21c gebildet wird Jede Frequenzlinie 64a bis 64j bzw. Frequenzbandlinie 74 entspricht einem der ersten Funktionsargumente 80 auf einer ersten Achse 82 und weist einen Funktionswert 84 auf, wobei auf der ersten Achse 82 die unterschiedlichen Empfangsrichtungen 21a bis 21c aufgetragen sind. Die Achse wird hier beispielhaft mit "w" für Winkel der Empfangsrichtung bezeichnet. Entsprechend der Bezeichnung einer Zeitfunktion in einem Zeitbereich kann die dargestellte Funktion daher als Richtungsfunktion in einem Winkelbereich bezeichnet werden.

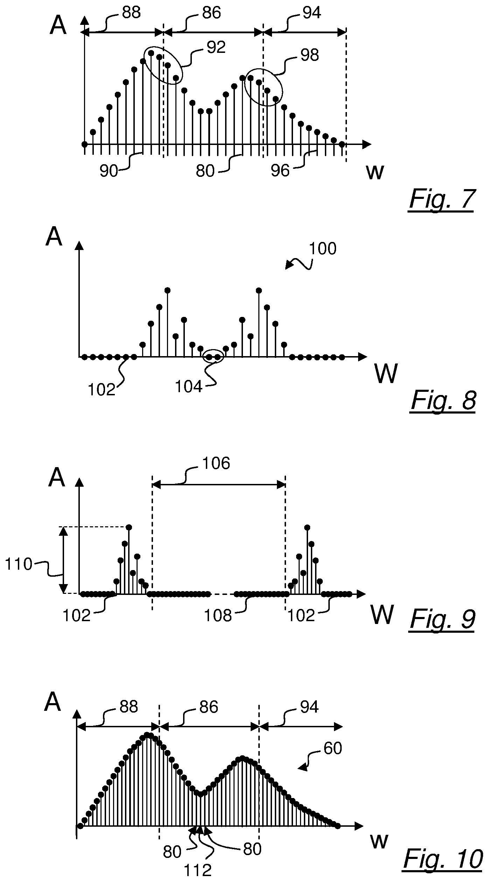

Fig. 7 zeigt in einem mittleren Abschnitt 86 die Richtungsfunktion 78 aus Fig. 6. Linksseitig des mittleren Abschnitts 86 sind in einem linksseitigen Abschnitt 88 linksseitige Funktionsargumente 90 unterhalb der ersten Funktionsargumente 64 hinzugefügt worden. Im Bereich 92 des am weitesten links liegenden Funktionsarguments der ersten Funktionsargumente 80 wird die Steigung der ersten Funktionsargumente 80 durch die linksseitigen Funktionsargumente 90 zunächst fortgeführt, bevor die linksseitigen Funktionsargumente 90 bis zum am weitesten links liegenden Funktionsargument der linksseitigen Funktionsargumente 90 auf einen Wert im Bereich von Null bzw. Null abfallen, also einen Funktionswert 84 im Bereich von Null bzw. Null aufweisen.

Rechtsseitig des mittleren Abschnitts 86 in einem rechtsseitigen Abschnitt 94 ist die Richtungsfunktion aus Fig. 6 mit rechtsseitigen Funktionsargumenten 96 aufgefüllt worden. Hierbei setzen im Bereich 98 des am weitesten rechts liegenden Funktionsarguments der ersten Funktionsargumente 80 die rechtsseitigen Funktionsargumente 96 die Steigung der ersten Funktionsargumente 80 fort, bevor das am weitesten rechts liegende der rechtsseitigen Funktionsargumente 96 auf einen Wert im Bereich von Null bzw. Null abfallen.

Fig. 8 zeigt den Realteil 100 einer ersten Spektralfunktion 46, der z.B. mit einer Fourier-Transformation einer Richtungsfunktion 78, wie sie in Fig. 6 dargestellt ist, aus dem Winkelbereich "w" in einen Winkelfrequenzbereich "W" erzeugt wird. Der dargestellte Realteil 100 weist erste Spektralfunktionsargumente 102 auf und ist bzgl. der mittleren Spektralfunktionsargumente 104 der ersten Spektralfunktionsargumente 102 symmetrisch, da die für die Erzeugung zugrundegelegte Richtungsfunktion 78 reellwertig ist.

Fig. 9 zeigt einen aufgefüllten Realteil 100 einer ersten Spektralfunktion 46, die in einem mittleren Abschnitt 106 mit weiteren Spektralfunktionsargumenten 108 zwischen den mittleren Spektralfunktionsargumenten 104 der ersten Spektralfunktionsargumente 102 aufgefüllt wurde. Die weiteren Spektralfunktionsargumente 108 im mittleren Abschnitt 106 weisen jeweils einen Funktionswert 110 im Bereich von Null, hier gleich Null, auf.

Fig. 10 zeigt eine interpolierte erste Richtungsfunktion 60, die durch Rücktransformation einer aufgefüllten ersten Spektralfunktion 46 erzeugt wurde. Diese interpolierte erste Richtungsfunktion 60 ähnelt der Richtungsfunktion 78 aus Fig. 6, wobei die interpolierte erste Richtungsfunktion 60 aus Fig. 10 zwischen den ersten, linksseitigen und rechtsseitigen Funktionsargumenten interpolierte Funktionsargumente 112 aufweist. Diese interpolierten Funktionsargumente 112 entsprechen interpolierten weiteren relativen Richtungen, die zwischen den Empfangsrichtungen 21a bis 21c bzw. Richtungen der entsprechenden ersten Funktionsargumente 80 linksseitigen Funktionsargumenten 90 und rechtsseitigen Funktionsargumenten 96 liegen.

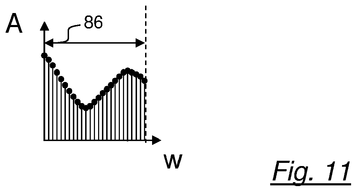

Fig. 11 zeigt den mittleren Abschnitt 86 aus Fig. 10 der interpolierten ersten Richtungsfunktion 60, der nach Auskopplung des linksseitigen Abschnitts 88 sowie des rechtsseitigen Abschnitts 94, z.B. durch einfaches Ausblenden, erhalten wird. Es werden nur noch die ersten Funktionsargumente 80 und die interpolierten Funktionswerte 112 dargestellt, deren entsprechende Empfangsrichtung 21a bis 21c bzw. interpolierte weitere relative Richtung im Bereich des Gesamtöffnungswinkels der Empfangsanordnung 12 liegt

Eine derartige interpolierte erste Richtungsfunktion 60 kann nun für jede Frequenzlinie 64a bis 64j bzw. Frequenz des Frequenzbereichs 62 bestimmt werden. Hieraus ergeben sich interpolierte Funktionsargumente 112 für jede Frequenz einer interpolierten Richtung. Aus diesen interpolierten Funktionsargumenten 112 derselben interpolierten Richtung können dann Betragsspektren 32 jeweils einer interpolierten Richtung gebildet werden.

Das erfindungsgemäße Verfahren bzw. die erfindungsgemäße Vorrichtung sowie deren Ausführungsbeispiele können vorteilhafterweise im Bereich von Unterwasserfahrzeugen oder Unterwasserlaufkörpern eingesetzt werden. Hierbei wird eine Sonaranlage des Unterwasserfahrzeugs bzw. des Unterwasserlaufkörpers durch die erfindungsgemäße Vorrichtung ergänzt bzw. derart ausgelegt, dass die Sonaranlage das erfindungsgemäße Verfahren durchführen kann.

**Patentansprüche**

1. Verfahren zum Erhöhen der Peilgenauigkeit einer Empfängeranordnung (12), wobei Schallwellen (15) mit der Empfängeranordnung (12) empfangen, aus den Schallwellen (15) mittels der Empfängeranordnung (12) Empfangssignale (16a bis 16c), aus den Empfangssignalen (16a bis 16c) Richtungssignale (20a bis 20c) jeweils einer relativen Empfangsrichtung (21a bis 21c) und aus jedem Richtungssignal (20a bis 20c) derselben Empfangsrichtung (21a bis 21c) zugeordnete Frequenzlinien (64a bis 64j) jeweils einer Frequenz eines Frequenzbereichs (62) mit einem Amplitudenwert (68) ermittelt werden, **dadurch gekennzeichnet, dass** für jede Frequenz des Frequenzbereichs (62) jeweils eine Richtungsfunktion (78) mit ersten Funktionsargumenten (80) gebildet wird, wobei jedes erste Funktionsargument (80) einer Richtungsfunktion (78) jeweils einer der Empfangsrichtungen (21a bis 21c) entspricht, benachbarte erste Funktionsargumente (80) benachbarten Empfangsrichtungen (21a bis 21c) entsprechen und jedes erste Funktionsargument (80) als Funktionswert (84) den Amplitudenwert (68) oder einen aus dem Amplitudenwert (68) abgeleiteten Wert der Frequenzlinie (64a bis 64j) der Frequenz der jeweiligen Richtungsfunktion (78) der dem ersten Funktionsargument (80) entsprechenden Empfangsrichtung (21a bis 21c) aufweist, und jede der Richtungsfunktionen (78) in den Spektralbereich transformiert und ein Realteil der daraus erhaltenen ersten Spektralfunktion (46) erste Spektralfunktionsargumente (102) aufweist und der Realteil der ersten Spektralfunktion (46) zwischen mittleren Spektralfunktionsargumenten (104) der ersten Spektralfunktionsargumente (102) mit weiteren Spektralfunktionsargumenten (108) aufgefüllt wird und bezüglich der mittleren Spektralfunktionsargumente (104) der ersten Spektralfunktion symmetrisch ist, wobei die weiteren Spektralfunktionsargumente (108) jeweils einen Funktionswert (84) von Null oder im Bereich von Null aufweisen, und die aufgefüllte erste Spektralfunktion (46) aus dem Spektralbereich rücktransformiert wird, wodurch sich eine interpolierte erste Richtungsfunktion (60) ergibt.

2. Verfahren nach Anspruch 1, **dadurch gekennzeichnet, dass** der Frequenzbereich (62) in Frequenzbänder (72a bis 72h) eingeteilt, die Frequenzlinien (64a bis 64j) für jedes Frequenzband (72a bis 72h) jeweils zu einer Frequenzbandlinie (74) zusammengefasst werden, wobei die Frequenzbandlinien (74) jeweils einen aus den Amplitudenwerten (68) oder einen aus den Amplitudenwerten (68) abgeleiteten Werten der Frequenzlinien (64a bis 64j) des jeweiligen Frequenzbandes (72a bis 72h) zusammengefassten Frequenzbandamplitudenwert (76) aufweisen, und für jedes Frequenzband (72a bis 72h) des Frequenzbereichs (62) jeweils eine Richtungsfunktion (78) gebildet wird, wobei jedes erste Funktionsargument (80) einer Richtungsfunktion (78) jeweils einer der Empfangsrichtungen (21a bis 21c) der Richtungssignale (20a bis 20c) entspricht und jedes erste Funktionsargument (80) als Funktionswert (84) den Frequenzbandamplitudenwert (76) der Frequenzbandlinie (74) des Frequenzbandes (72a bis 72h) der jeweiligen Richtungsfunktion (78) der dem ersten Funktionsargument (80) entsprechenden Empfangsrichtung (21a bis 21c) aufweist.

3. Verfahren nach Anspruch 1 oder 2, **dadurch gekennzeichnet, dass** die Empfangssignale (16a bis 16c) zum Ermitteln der Richtungssignale (20a bis 20c) jeweils in ein tieferes Band frequenzumgesetzt, die frequenzumgesetzten Empfangssignale (16a bis 16c) jeweils tiefpassgefiltert und die tiefpassgefilterten frequenzumgesetzten Empfangssignale (16a bis 16c) jeweils digitalisiert werden und aus den digitalisierten tiefpassgefilterten frequenzumgesetzten Empfangssignalen (16a bis 16c) Richtungssignale (20a bis 20c), insbesondere durch Laufzeitkompensation und Addition, ermittelt werden.

4. Verfahren nach einem der vorherigen Ansprüche, **dadurch gekennzeichnet, dass** die Richtungsfunktionen (78) mit einer komplexen diskreten Fourier-Transformation in den Spektralbereich transformiert und die ersten Spektralfunktionen (46) mit einer inversen komplexen diskreten Fourier-Transformation aus dem Spektralbereich zurücktransfomiert werden.

5. Verfahren nach einem der vorherigen Ansprüche, **dadurch gekennzeichnet, dass** linksseitige Funktionsargumente (90) und rechtsseitige Funktionsargumente (96) Richtungen, die außerhalb eines Gesamtöffnungswinkels der Empfängeranordnung (12) liegen, entsprechen und die linksseitigen Funktionsargumente (90), die linksseitig der Empfangsrichtungen (21a bis 21c) liegenden Richtungen entsprechen, und die rechtsseitigen Funktionsargumente (96), die rechtsseitig der Empfangsrichtung (21a bis 21c) liegenden Richtungen entsprechen, in jede der Richtungsfunktionen (78) hinzugefügt werden, wobei linksseitige Funktionsargumente (50) linksseitig bzw. unterhalb des ersten Funktionsarguments (80), das der am weitesten links liegenden Empfangsrichtung (21a bis 21c) entspricht und rechtsseitige Funktionsargumente (96) rechtsseitig bzw. oberhalb des ersten Funktionsarguments (80), das der am weitesten rechts liegenden Empfangsrichtung (21a bis 21c) entspricht hinzugefügt werden, sodass die Anzahl der gesamten Funktionsargumente (80, 90, 96) einer Richtungsfunktion (78) einer Zweierpotenz entspricht.

6. Verfahren nach Anspruch 5,
**dadurch gekennzeichnet, dass**
die Funktionswerte (84) des linksseitigen Funktionsarguments (90), das der am weitesten links liegenden Richtung entspricht, und des rechtsseitigen Funktionsarguments (96), das der am weitesten rechts liegenden Richtung entspricht, derart gewählt werden, dass diese Funktionswerte (84) Werte im Bereich von Null oder den Wert Null aufweisen.

7. Verfahren nach Anspruch 6,
**dadurch gekennzeichnet, dass**
der Steigungsverlauf der Funktionswerte (84) der ersten Funktionsargumente (80) durch die Funktionswerte (84) der linksseitigen Funktionsargumente (90) im Bereich (92) des ersten Funktionsarguments (80), das der am weitesten links liegenden Empfangsrichtung (21a bis 21c) entspricht, und der Steigungsverlauf der Funktionswerte (84) der ersten Funktionsargumente (80) durch die Funktionswerte (84) der rechtsseitigen Funktionsargumente (96) im Bereich des ersten Funktionsarguments (80), das der am weitesten rechts liegenden Empfangsrichtung (21a bis 21c) entspricht fortgeführt werden.

8. Verfahren nach einem der vorherigen Ansprüche,
**dadurch gekennzeichnet, dass**
jeweils eine zu der ersten Spektralfunktion (46) identische zweite Spektralfunktion (50) mit der Funktionsvariablen (jW) oder der negierten Funktionsvariablen (-jW) der Spektralfunktionen multipliziert, in gleicher Weise wie die jeweilige erste Spektralfunktion (46) mit weiteren Spektralfunktionsargumenten (108) aufgefüllt und zu einer interpolierten zweiten Richtungsfunktion (58) rücktransformiert wird.

9. Verfahren nach einem der vorherigen Ansprüche,
**dadurch gekennzeichnet, dass**
jede der interpolierten ersten Richtungsfunktionen (60) durch lineare Interpolation mit zusätzlichen weiteren Funktionsargumenten mit interpolierten Funktionswerten (84) aufgefüllt wird.

10. Vorrichtung zur Erhöhung der Peilgenauigkeit einer Empfängeranordnung (12), wobei die Vorrichtung derart ausgebildet ist, um Schallwellen (15) mit der Empfängeranordnung (12) zu empfangen, aus den Schallwellen (15) mittels der Empfängeranordnung (12) Empfangssignale (16a bis 16c), aus den Empfangssignalen (16a bis 16c) Richtungssignale (20a bis 20c) jeweils einer relativen Empfangsrichtung (21a bis 21c) und aus jedem Richtungssignal (20a bis 20c) derselben Empfangsrichtung (21a bis 21c) zugeordnete Frequenzlinien (64a bis 64j) jeweils einer Frequenz eines Frequenzbereichs (62) mit einem Amplitudenwert (68) zu ermitteln,
**dadurch gekennzeichnet, dass**
die Vorrichtung derart ausgebildet ist, um für jede Frequenz des Frequenzbereichs (62) jeweils eine Richtungsfunktion (78) mit ersten Funktionsargumenten (80) zu bilden, wobei jedes erste Funktionsargument (80) einer Richtungsfunktion (78) jeweils einer der Empfangsrichtungen (21a bis 21c) entspricht, benachbarte erste Funktionsargumente (80) benachbarten Empfangsrichtungen (21a bis 21c) entsprechen und jedes erste Funktionsargument (80) als Funktionswert (84) den Amplitudenwert (68) oder einen aus dem Amplitudenwert (68) abgeleiteten Wert der Frequenzlinie (64a bis 64j) der Frequenz der jeweiligen Richtungsfunktion (78) der dem ersten Funktionsargument (80) entsprechenden Empfangsrichtung (21a bis 21c) aufweist, und um jede der Richtungsfunktionen (78) in den Spektralbereich zu transformieren, wobei ein Realteil der daraus erhaltenen ersten Spektralfunktion (46) erste Spektralfunktionsargumente (102) aufweist, und um den Realteil der ersten Spektralfunktion (46) zwischen mittleren Spektralfunktionsargumenten (104) der ersten Spektralfunktionsargumente (102), mit der weiteren Spektralfunktionsargumenten (108) aufzufüllen, wobei der Realteil bezüglich der mittleren Spektralfunktionsargumente (104) der ersten Spektralfunktion symmetrisch ist und die weiteren Spektralfunktionsargumente (108) jeweils einen Funktionswert (84) von Null oder im Bereich von Null aufweisen, und um die aufgefüllte erste Spektralfunktion (46) aus dem Spektralbereich rückzutransformieren, wodurch sich eine interpolierte erste Richtungsfunktion (60) ergibt.

11. Vorrichtung nach Anspruch 10,
**dadurch gekennzeichnet, dass**
die Vorrichtung derart ausgebildet ist, um den Frequenzbereich (62) in Frequenzbänder (72a bis 72h) einzuteilen, die Frequenzlinien (64a bis 64j) für jedes Frequenzband (72a bis 72h) jeweils zu einer Frequenzbandlinie (74) zusammenzufassen, wobei die Frequenzbandlinien (74) jeweils einen aus den Amplitudenwerten (68) oder einen aus den Amplitudenwerten (68) abgeleiteten Werten der Frequenzlinien (64a bis 64j) des jeweiligen Frequenzbandes (72a bis 72h) zusammengefassten Frequenzbandamplitudenwert (76) aufweisen, und für jedes Frequenzband (72a bis 72h) des Frequenzbereichs (62) jeweils eine Richtungsfunktion (78) zu bilden, wobei jedes erste Funktionsargument (80) einer Richtungsfunktion (78) jeweils einer der Empfangsrichtungen (21a bis 21c) der Richtungssignale (20a bis 20c) entspricht und jedes erste Funktionsargument (80) als Funktionswert (84) den Frequenzbandamplitudenwert (76) der Frequenzbandlinie (74) des Frequenzbandes (72a bis 72h) der jeweiligen Richtungsfunktion (78) der dem ersten Funktionsargument (80) entsprechenden Empfangsrichtung (21a bis 21c) aufweist.

12. Vorrichtung nach Anspruch 10 oder 11,
    **dadurch gekennzeichnet, dass**
    die Vorrichtung derart ausgebildet ist, um die Empfangssignale (16a bis 16c) zum Ermitteln der Richtungssignale (20a bis 20c) jeweils in ein tieferes Band frequenzumzusetzen, die frequenzumgesetzten Empfangssignale (16a bis 16c) jeweils tiefpasszufiltern und die tiefpassgefilterten frequenzumgesetzten Empfangssignale (16a bis 16c) jeweils zu digitalisieren und aus den digitalisierten tiefpassgefilterten frequenzumgesetzten Empfangssignalen (16a bis 16c) Richtungssignale (20a bis 20c), insbesondere durch Laufzeitkompensation und Addition, zu ermitteln.

13. Vorrichtung nach einem der vorherigen Ansprüche 10 bis 12,
    **dadurch gekennzeichnet, dass**
    die Vorrichtung derart ausgebildet ist, um die Richtungsfunktionen (78) mit einer komplexen diskreten Fourier-Transformation in den Spektralbereich zu transformieren und die ersten Spektralfunktionen (46) mit einer inversen komplexen diskreten Fourier-Transformation aus dem Spektralbereich zurückzutransformieren.

14. Vorrichtung nach einem der vorherigen Ansprüche 10 bis 13,
    **dadurch gekennzeichnet, dass**
    linksseitige Funktionsargumente (90) und rechtsseitige Funktionsargumente (96) Richtungen, die außerhalb eines Gesamtöffnungswinkels der Empfängeranordnung (12) liegen, entsprechen und die Vorrichtung derart ausgebildet ist, um die linksseitigen Funktionsargumente (96), die linksseitig der Empfangsrichtungen (21a bis 21c) liegenden Richtungen entsprechen, und die rechtsseitigen Funktionsargumente (96), die rechtsseitig der Empfangsrichtung (21a bis 21c) liegenden Richtungen entsprechen, in jede der Richtungsfunktionen (78) hinzuzufügen, wobei die Vorrichtung derart ausgebildet ist, um linksseitige Funktionsargumente (90) linksseitig bzw. unterhalb des ersten Funktionsarguments (80), das der am weitesten links liegenden Empfangsrichtung (21a bis 21c) entspricht und rechtsseitige Funktionsargumente (96) rechtsseitig bzw. oberhalb des ersten Funktionsarguments (80), das der am weitesten rechts liegenden Empfangsrichtung (21a bis 21c) entspricht hinzuzufügen, sodass die Anzahl der gesamten Funktionsargumente (80, 90, 96) einer Richtungsfunktion (78) einer Zweierpotenz entspricht.

15. Vorrichtung nach Anspruch 14,
    **dadurch gekennzeichnet, dass**

die Vorrichtung derart ausgebildet ist, um den Funktionswert (84) des linksseitigen Funktionsarguments (90), das der am weitesten links liegenden Richtung entspricht, und des rechtsseitigen Funktionsarguments (86), das der am weitesten rechts liegenden Richtung entspricht derart zu wählen, dass diese Werte im Bereich von Null oder den Wert Null aufweisen.

**Claims**

1. Method for increasing the direction-finding accuracy of a receiver arrangement (12), wherein sound waves (15) are received using the receiver arrangement (12), received signals (16a to 16c) are ascertained from the sound waves (15) by means of the receiver arrangement (12), direction signals (20a to 20c) for a respective relative reception direction (21a to 21c) are ascertained from the received signals (16a to 16c) and associated frequency lines (64a to 64j) for a respective frequency of a frequency range (62) with an amplitude value (68) are ascertained from each direction signal (20a to 20c) for the same reception direction (21a to 21c),
   **characterized in that**
   a respective direction function (78) with first function arguments (80) is formed for each frequency of the frequency range (62), wherein each first function argument (80) of a direction function (78) is consistent with a respective one of the reception directions (21a to 21c), adjacent first function arguments (80) are consistent with adjacent reception directions (21a to 21c) and each first function argument (80) comprises, as a function value (84), the amplitude value (68) or a value derived from the amplitude value (68) for the frequency line (64a to 64j) of the frequency of the respective direction function (78) of the reception direction (21a to 21c) consistent with the first function argument (80), and each of the direction functions (78) is transformed into the spectral domain and a real portion of the first spectral function (46) obtained therefrom comprises first spectral function arguments (102) and the real portion of the first spectral function (46) is filled with further spectral function arguments (108) between intermediate spectral function arguments (104) of the first spectral function arguments (102) and is symmetrical in relation to the intermediate spectral function arguments (104) of the first spectral function, wherein the further spectral function arguments (108) each comprise a function value (84) of zero or in the region of zero, and the filled first spectral function (46) is transformed back from the spectral domain, resulting in an interpolated first direction function (60).

2. Method according to Claim 1,
   **characterized in that**

the frequency range (62) is divided into frequency bands (72a to 72h), the frequency lines (64a to 64j) for each frequency band (72a to 72h) are each combined to form a frequency band line (74), wherein the frequency band lines (74) each comprise a frequency band amplitude value (76) combined from the amplitude values (68) or a frequency band amplitude value (76) combined from values, derived the amplitude values (68), of the frequency lines (64a to 64j) of the respective frequency band (72a to 72h), and a respective direction function (78) is formed for each frequency band (72a to 72h) of the frequency range (62), wherein each first function argument (80) of a direction function (78) is consistent with a respective one of the reception directions (21a to 21c) of the direction signals (20a to 20c) and each first function argument (80) comprises, as a function value (84), the frequency band amplitude value (76) of the frequency band line (74) of the frequency band (72a to 72h) of the respective direction function (78) the reception direction (21a to 21c) consistent with the first function argument (80).

3. Method according to Claim 1 or 2,
   **characterized in that**
   the received signals (16a to 16c) for ascertaining the direction signals (20a to 20c) are each frequency-converted into a lower band, the frequency-converted received signals (16a to 16c) are each low-pass-filtered and the low-pass-filtered frequency-converted received signals (16a to 16c) are each digitized and direction signals (20a to 20c) are ascertained from the digitized low-pass-filtered frequency-converted received signals (16a to 16c), in particular by means of delay compensation and addition.

4. Method according to one of the preceding claims,
   **characterized in that**
   the direction functions (78) are transformed into the spectral domain using a complex discrete Fourier transformation, and the first spectral functions (46) are transformed back from the spectral domain using an inverse complex discrete Fourier transformation.

5. Method according to one of the preceding claims,
   **characterized in that**
   left-hand function arguments (90) and right-hand function arguments (96) are consistent with directions that are outside a total beam angle of the receiver arrangement (12), and the left-hand function arguments (90), which are consistent with directions to the left of the reception directions (21a to 21c), and the right-hand function arguments (96), which are consistent with directions to the right of the reception direction (21a to 21c), are added to each direction function (78), with left-hand function arguments (50) being added to the left of or below the first function argument (80) that is consistent with the reception direction (21a to 21c) furthest to the left and right-hand function arguments (96) being added to the right of or above the first function argument (80) that is consistent with the reception direction (21a to 21c) furthest to the right, so that the number of all of the function arguments (80, 90, 96) is consistent with a direction function (78) to a power of two.

6. Method according to Claim 5,
   **characterized in that**
   the function values (84) of the left-hand function argument (90), which is consistent with the direction furthest to the left, and of the right-hand function argument (96), which is consistent with the direction furthest to the right, are chosen such that these function values (84) comprise values in the region of zero or the value zero.

7. Method according to Claim 6,
   **characterized in that**
   the gradient profile of the function values (84) of the first function arguments (80) is continued by the function values (84) of the left-hand function arguments (90) in the region (92) of the first function argument (80) that is consistent with the reception direction (21a to 21c) furthest to the left, and the gradient profile of the function values (84) of the first function arguments (80) is continued by the function values (84) of the right-hand function arguments (96) in the region of the first function argument (80) that is consistent with the reception direction (21a to 21c) furthest to the right.

8. Method according to one of the preceding claims,
   **characterized in that**
   a respective second spectral function (50), identical to the first spectral function (46), is multiplied by the function variables (jW) or the negated function variables (-jW) of the spectral functions, in the same way as the respective first spectral function (46) is filled with further spectral function arguments (108) and transformed back to produce an interpolated second direction function (58).

9. Method according to one of the preceding claims,
   **characterized in that**
   each of the interpolated first direction functions (60) is filled with interpolated function values (84) by means of linear interpolation with additional further function arguments.

10. Device for increasing the direction-finding accuracy of a receiver arrangement (12), wherein the device is designed so as to receive sound waves (15) using the receiver arrangement (12), to ascertain received signals (16a to 16c) from the sound waves (15) by means of the receiver arrangement (12), to ascertain direction signals (20a to 20c) for a respective relative reception direction (21a to 21c) from the received signals (16a to 16c) and to ascertain associated frequency lines (64a to 64j) for a respective frequency of a frequency range (62) with an amplitude value (68) from each direction signal (20a to 20c) for the same reception direction (21a to 21c),

**characterized in that**

the device is designed so as to form a respective direction function (78) with first function arguments (80) for each frequency of the frequency range (62), wherein each first function argument (80) of a direction function (78) is consistent with a respective one of the reception directions (21a to 21c), adjacent first function arguments (80) are consistent with adjacent reception directions (21a to 21c) and each first function argument (80) comprises, as a function value (84), the amplitude value (68) or a value derived from the amplitude value (68) for the frequency line (64a to 64j) of the frequency of the respective direction function (78) of the reception direction (21a to 21c) consistent with the first function argument (80), and to transform each of the direction functions (78) into the spectral domain, wherein a real portion of the first spectral function (46) obtained therefrom comprises first spectral function arguments (102), and to fill the real portion of the first spectral function (46), with the further spectral function arguments (108) between intermediate spectral function arguments (104) of the first spectral function arguments (102), wherein the real portion is symmetrical in relation to the intermediate spectral function arguments (104) of the first spectral function and the further spectral function arguments (108) each comprise a function value (84) of zero or in the region of zero, and to transform back the filled first spectral function (46) from the spectral domain, resulting in an interpolated first direction function (60).

11. Device according to Claim 10,
**characterized in that**
the device is designed so as to divide the frequency range (62) into frequency bands (72a to 72h), to combine each of the frequency lines (64a to 64j) for each frequency band (72a to 72h) to form a frequency band line (74), wherein the frequency band lines (74) each comprise a frequency band amplitude value (76) combined from the amplitude values (68) or a frequency band amplitude value (76) combined from values, derived at the amplitude values (68), of the frequency lines (64a to 64j) of the respective frequency band (72a to 72h), and to form a respective direction function (78) for each frequency band (72a to 72h) of the frequency range (62), wherein each first function argument (80) of a direction function (78) is consistent with a respective one of the reception directions (21a to 21c) of the direction signals (20a to 20c) and each first function argument (80) comprises, as a function value (84), the frequency band amplitude value (76) of the frequency band line (74) of the frequency band (72a to 72h) of the respective direction function (78) of the reception direction (21a to 21c) consistent with the first function argument (80).

12. Device according to Claim 10 or 11,
**characterized in that**
the device is designed so as to frequency-convert each of the received signals (16a to 16c) for ascertaining the direction signals (20a to 20c) into a lower band, to low-pass-filter each of the frequency-converted received signals (16a to 16c) and to digitize each of the low-pass-filtered frequency-converted received signals (16a to 16c) and to ascertain direction signals (20a to 20c) from the digitized low-pass-filtered frequency-converted received signals (16a to 16c), in particular by means of delay compensation and addition.

13. Device according to one of the preceding Claims 10 to 12,
**characterized in that**
the device is designed so as to transform the direction functions (78) into the spectral domain using a complex discrete Fourier transformation, and to transform back the first spectral functions (46) from the spectral domain using an inverse complex discrete Fourier transformation.

14. Device according to one of the preceding Claims 10 to 13,
**characterized in that**
left-hand function arguments (90) and right-hand function arguments (96) are consistent with directions that are outside a total beam angle of the receiver arrangement (12), and the device is designed so as to add the left-hand function arguments (90), which are consistent with directions to the left of the reception directions (21a to 21c), and the right-hand function arguments (96), which are consistent with directions to the right of the reception direction (21a to 21c), to each direction function (78), wherein the device is designed so as to add left-hand function arguments (90) to the left of or below the first function argument (80) that is consistent with the reception direction (21a to 21c) furthest to the left and to add right-hand function arguments (96) to the right of or above the first function argument (80) that is consistent with the reception direction (21a to 21c) furthest to the right, so that the number of all of the function arguments (80, 90, 96) is consistent with a direction function (78) to a power of two.

15. Device according to Claim 14,
**characterized in that**
the device is designed so as to choose the function value (84) of the left-hand function argument (90), which is consistent with the direction furthest to the left, and of the right-hand function argument (86), which is consistent with the direction furthest to the right, such that said function values comprise values in the region of zero or the value zero.

## Revendications

1. Procédé d'augmentation de la précision de pointage d'un arrangement récepteur (12), des ondes acoustiques (15) étant reçues avec l'arrangement récepteur (12), des signaux reçus (16a à 16c) étant déterminés à partir des ondes acoustiques (15) au moyen de l'arrangement récepteur (12), des signaux de direction (20a à 20c) respectifs d'une direction de réception relative (21a à 21c) à partir des signaux reçus (16a à 16c) et, à partir des lignes de fréquence (64a à 64j) associées à chaque signal de direction (20a à 20c) de la même direction de réception (21a à 21c), respectivement une fréquence d'une plage de fréquences (62) avec une valeur d'amplitude (68), **caractérisé en ce que**

une fonction de direction (78) ayant des premiers arguments de fonction (80) est respectivement formée pour chaque fréquence de la plage de fréquences (62), chaque premier argument de fonction (80) d'une fonction de direction (78) correspondant respectivement à l'une des directions de réception (21a à 21c), les premiers arguments de fonction (80) voisins correspondant à des directions de réception (21a à 21c) voisines et chaque premier argument de fonction (80) possédant comme valeur de fonction (84) la valeur d'amplitude (68) ou une valeur dérivée de la valeur d'amplitude (68) de la ligne de fréquence (64a à 64j) de la fréquence de la fonction de direction (78) respective de la direction de réception (21a à 21c) qui correspond au premier argument de fonction (80), et chacune des fonctions de direction (78) étant transformée dans le domaine spectral et une partie réelle de la première fonction spectrale (46) obtenue à partir de cette transformée possédant des premiers arguments de fonction spectrale (102) et la partie réelle de la première fonction spectrale (46) étant remplie entre des arguments de fonction spectrale centraux (104) des premiers arguments de fonction spectrale (102) avec des arguments de fonction spectrale supplémentaires (108) et étant symétrique par rapport aux arguments de fonction spectrale centraux (104) de la première fonction spectrale, les arguments de fonction spectrale supplémentaires (108) possédant respectivement une valeur de fonction (84) égale à zéro ou de l'ordre de zéro, et la première fonction spectrale (46) remplie étant soumise à une transformée inverse depuis le domaine spectral, ce qui produit une première fonction de direction interpolée (60).

2. Procédé selon la revendication 1, **caractérisé en ce que** la plage de fréquences (62) est divisée en bandes de fréquences (72a à 72h), les lignes de fréquence (64a à 64j) pour chaque bande de fréquences (72a à 72h) sont respectivement regroupées en une ligne de bande de fréquences (74), les lignes de bande de fréquences (74) possédant respectivement une valeur d'amplitude de bande de fréquences (76) regroupée à partir des valeurs d'amplitude (68) ou une valeur d'amplitude de bande de fréquences (76) regroupée à partir de valeurs dérivées les valeurs d'amplitude (68) des lignes de fréquence (64a à 64j) de la bande de fréquences (72a à 72h) respective, et une fonction de direction (78) étant respectivement formée pour chaque bande de fréquences (72a à 72h) de la plage de fréquences (62), chaque premier argument de fonction (80) d'une fonction de direction (78) correspondant respectivement à l'une des directions de réception (21a à 21c) des signaux de direction (20a à 20c) et chaque premier argument de fonction (80) possédant comme valeur de fonction (84) la valeur d'amplitude de bande de fréquences (76) de la ligne de bande de fréquences (74) de la bande de fréquences (72a à 72h) de la fonction de direction (78) respective de la direction de réception (21a à 21c) correspondant au premier argument de fonction (80).

3. Procédé selon la revendication 1 ou 2, **caractérisé en ce que** les signaux reçus (16a à 16c), en vue de déterminer les signaux de direction (20a à 20c), sont respectivement convertis en fréquence dans une bande plus basse, les signaux reçus (16a à 16c) convertis en fréquence sont respectivement soumis à un filtrage passe-bas et les signaux reçus (16a à 16c) convertis en fréquence filtrés passe-bas sont respectivement numérisés et des signaux de direction (20a à 20c) sont déterminés à partir des signaux reçus (16a à 16c) convertis en fréquence filtrés passe-bas numérisés, notamment par compensation du temps de propagation et addition.

4. Procédé selon l'une des revendications précédentes, **caractérisé en ce que** les fonctions de direction (78) sont transformées dans le domaine spectral avec une transformée de Fourier discrète complexe et les premières fonctions spectrales (46) sont soumises à une transformée inverse depuis le domaine spectral avec une transformée de Fourier discrète complexe inverse.

5. Procédé selon l'une des revendications précédentes, **caractérisé en ce que** les arguments de fonction côté gauche (90) et les arguments de fonction côté droit (96) correspondent à des directions qui se trouvent en-dehors de l'angle d'ouverture total de l'arrangement récepteur (12), et les arguments de fonction côté gauche (90), qui correspondent aux directions se trouvant du côté gauche des directions de réception (21a à 21c), et les arguments de fonction côté droit (96), qui correspondent aux directions se trouvant du côté droit de la direction de réception (21a à 21c), sont ajoutés dans chacune des fonctions de direction (78), les arguments de fonction côté gauche (90) étant ajoutés du côté gauche ou au-dessous du premier argument de fonction (80) qui correspond à la direction de réception (21a à 21c) se trouvant le plus à gauche et les arguments de fonction côté droit (96) étant ajoutés du côté droit ou au-dessus du premier argument de fonction (80) qui correspond à la direction de réception (21a à 21c) se trouvant le plus à droite, de sorte que le nombre total des arguments de fonction (80, 90, 96) d'une fonction de direction (78) correspond à une puissance de deux.

6. Procédé selon la revendication 5, **caractérisé en ce que** les valeurs de fonction (84) de l'argument de fonction côté gauche (90), qui correspond à la direction se trouvant le plus à gauche, et de l'argument de fonction côté droit (96) qui correspond à la direction se trouvant le plus à droite, sont choisies de telle sorte que ces valeurs de fonction (84) possèdent des valeurs de l'ordre de zéro ou égales à zéro.

7. Procédé selon la revendication 6, **caractérisé en ce que** le tracé de la pente des valeurs de fonction (84) des premiers arguments de fonction (80) est poursuivi par les valeurs de fonction (84) des arguments de fonction côté gauche (90) dans la zone (92) du premier argument de fonction (80) qui correspond à la direction de réception (21a à 21c) se trouvant le plus à gauche, et le tracé de la pente des valeurs de fonction (84) des premiers arguments de fonction (80) par les valeurs de fonction (84) des arguments de fonction côté droit (96) dans la zone du premier argument de fonction (80) qui correspond à la direction de réception (21a à 21c) se trouvant le plus à droite.

8. Procédé selon l'une des revendications précédentes, **caractérisé en ce qu'**une deuxième fonction spectrale (50) identique à la première fonction spectrale (46) est respectivement multipliée par les variables de fonction (jW) ou les variables de fonction négatives (-jW) des fonctions spectrales, remplie avec des arguments de fonction spectrale supplémentaires (108) de la même manière que la première fonction spectrale (46) respective et soumise à une transformée inverse en une deuxième fonction de direction (58) interpolée.

9. Procédé selon l'une des revendications précédentes, **caractérisé en ce que** chacune des premières fonctions de direction (60) interpolées est remplie par interpolation linéaire avec d'autres arguments de fonction supplémentaires ayant des valeurs de fonction (84) interpolées.

10. Dispositif d'augmentation de la précision de pointage d'un arrangement récepteur (12), le dispositif étant conçu pour recevoir des ondes acoustiques (15) avec l'arrangement récepteur (12), déterminer des signaux reçus (16a à 16c) à partir des ondes acoustiques (15) au moyen de l'arrangement récepteur (12), des signaux de direction (20a à 20c) respectifs d'une direction de réception relative (21a à 21c) à partir des signaux reçus (16a à 16c) et, à partir des lignes de fréquence (64a à 64j) associées à chaque signal de direction (20a à 20c) de la même direction de réception (21a à 21c), respectivement une fréquence d'une plage de fréquences (62) avec une valeur d'amplitude (68),
**caractérisé en ce que**
le dispositif est conçu pour former respectivement une fonction de direction (78) ayant des premiers arguments de fonction (80) pour chaque fréquence de la plage de fréquences (62), chaque premier argument de fonction (80) d'une fonction de direction (78) correspondant respectivement à l'une des directions de réception (21a à 21c), les premiers arguments de fonction (80) voisins correspondant à des directions de réception (21a à 21c) voisines et chaque premier argument de fonction (80) possédant comme valeur de fonction (84) la valeur d'amplitude (68) ou une valeur dérivée de la valeur d'amplitude (68) de la ligne de fréquence (64a à 64j) de la fréquence de la fonction de direction (78) respective de la direction de réception (21a à 21c) qui correspond au premier argument de fonction (80), et pour transformer chacune des fonctions de direction (78) dans le domaine spectral, une partie réelle de la première fonction spectrale (46) obtenue à partir de cette transformée possédant des premiers arguments de fonction spectrale (102), et pour remplir la partie réelle de la première fonction spectrale (46) entre des arguments de fonction spectrale centraux (104) des premiers arguments de fonction spectrale (102) avec les arguments de fonction spectrale supplémentaires (108), la partie réelle étant symétrique par rapport aux arguments de fonction spectrale centraux (104) de la première fonction spectrale et les arguments de fonction spectrale supplémentaires (108) possédant respectivement une valeur de fonction (84) égale à zéro ou de l'ordre de zéro, et pour soumettre la première fonction spectrale (46) remplie à une transformée inverse depuis le domaine spectral, ce qui produit une première fonction de direction interpolée (60).

11. Dispositif selon la revendication 10,
**caractérisé en ce que** le dispositif est conçu pour diviser la plage de fréquences (62) en bandes de fréquences (72a à 72h), regrouper les lignes de fréquence (64a à 64j) pour chaque bande de fréquences (72a à 72h) respectivement en une ligne de bande de fréquences (74), les lignes de bande de fréquences (74) possédant respectivement une valeur d'amplitude de bande de fréquences (76) regroupée à partir des valeurs d'amplitude (68) ou une valeur d'amplitude de bande de fréquences (76) regroupée à partir de valeurs dérivées les valeurs d'amplitude (68) des lignes de fréquence (64a à 64j) de la bande de fréquences (72a à 72h) respective, et pour former une fonction de direction (78) respectivement pour chaque bande de fréquences (72a à 72h) de la plage de fréquences (62), chaque premier argument de fonction (80) d'une fonction de direction (78) correspondant respectivement à l'une des directions de réception (21a à 21c) des signaux de direction (20a à 20c) et chaque premier argument de fonction (80) possédant comme valeur de fonction (84) la valeur d'amplitude de bande de fréquences (76) de la ligne de bande de fréquences (74) de la bande de fréquences (72a à 72h) de la fonction de direction (78) respective de la direction de réception (21a à 21c) correspondant au premier argument de fonction (80).

12. Dispositif selon la revendication 10 ou 11, **caractérisé en ce que** le dispositif est conçu pour, en vue de déterminer les signaux de direction (20a à 20c), convertir en fréquence les signaux reçus (16a à 16c) respectivement dans une bande plus basse, effectuer respectivement un filtrage passe-bas des signaux reçus (16a à 16c) convertis en fréquence et numériser respectivement les signaux reçus (16a à 16c) convertis en fréquence filtrés passe-bas et déterminer les signaux de direction (20a à 20c) à partir des signaux reçus (16a à 16c) convertis en fréquence filtrés passe-bas numérisés, notamment par compensation du temps de propagation et addition.

13. Dispositif selon l'une des revendications précédentes 10 à 12, **caractérisé en ce que** le dispositif est conçu pour transformer les fonctions de direction (78) dans le domaine spectral avec une transformée de Fourier discrète complexe et effectuer une transformée inverse des premières fonctions spectrales (46) depuis le domaine spectral avec une transformée de Fourier discrète complexe inverse.

14. Dispositif selon l'une des revendications précédentes 10 à 13, **caractérisé en ce que** des arguments de fonction côté gauche (90) et des arguments de fonction côté droit (96) correspondent à des directions qui se trouvent en-dehors de l'angle d'ouverture total de l'arrangement récepteur (12), et le dispositif est conçu pour ajouter les arguments de fonction côté gauche (96), qui correspondent aux directions se trouvant du côté gauche des directions de réception (21a à 21c), et les arguments de fonction côté droit (96), qui correspondent aux directions se trouvant du côté droit de la direction de réception (21a à 21c), dans chacune des fonctions de direction (78), le dispositif étant conçu pour ajouter des arguments de fonction côté gauche (90) du côté gauche ou au-dessous du premier argument de fonction (80) qui correspond à la direction de réception (21a à 21c) se trouvant le plus à gauche, et les arguments de fonction côté droit (96) du côté droit ou au-dessus du premier argument de fonction (80) qui correspond à la direction de réception (21a à 21c) se trouvant le plus à droite, de sorte que le nombre total des arguments de fonction (80, 90, 96) d'une fonction de direction (78) correspond à une puissance de deux.

15. Dispositif selon la revendication 14, **caractérisé en ce que** le dispositif est conçu pour sélectionner la valeur de fonction (84) de l'argument de fonction côté gauche (90), qui correspond à la direction se trouvant le plus à gauche, et de l'argument de fonction côté droit (86) qui correspond à la direction se trouvant le plus à droite, de telle sorte que celles-ci possèdent des valeurs de l'ordre de zéro ou égales à zéro.

_Fig. 1_

_Fig. 2_

_Fig. 3_

*Fig. 4*

*Fig. 5a*

*Fig. 5b*

*Fig. 6*

_Fig. 7_

_Fig. 8_

_Fig. 9_

_Fig. 10_

*Fig. 11*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2459219
- WO 0016308 A